# EUROPEAN PATENT SPECIFICATION

(11) **EP 0 804 340 B1**
(45) Date of publication and mention of the grant of the patent: **06.06.2001**
(21) Application number: 95937895.1
(22) Date of filing: 10.11.1995
(51) Int. Cl.: B32B 3/04, B65D 30/24

(54) **HOSE-LIKE BLANK OF A PLASTIC MATERIAL AND USE OF SAME IN PACKAGES, IN PARTICULAR IN SACKS PROVIDED WITH A VALVE**
SCHLAUCHFÖRMIGER KUNSTSTOFFROHLING UND SEINE VERWENDUNG IN VERPACKUNGEN, INSBESONDERE IN MIT EINEM VENTIL VERSEHENEN BEUTEL
EBAUCHE DE TYPE TUYAU CONSTITUEE DE MATIERE PLASTIQUE ET UTILISATION DE CETTE D'EBAUCHE DANS DES EMBALLAGES, EN PARTICULIER DANS DES SACS POURVUS D'UNE VALVE

(43) Date of publication of application: 05.11.1997
(73) Proprietor: UPM-Kymmene Oy, 00170 Helsinki (FI)
(72) Inventor: MÄKITALO, Tapio, FIN-29630 Pomarkku (FI)
(74) Representative: Salonen, Esko Tapani
(86) International application number: FI9500612
(87) International publication number: WO9717196

(56) References cited:
- EP-A- 0 219 315
- EP-A- 0 222 184

## Description

The invention concerns a hose-like blank of a plastic material.

The invention also concerns the use of the hose-like blank in accordance with the invention in packages, in particular in sacks provided with a valve.

As is well known, films made of polyolefins are used for formation of packages, such as, for example, sacks provided with a valve. A package is produced from the film by folding, gluing or seaming. When the package is used as a package for materials that tend to produce static electricity, a problem is how to produce electrical conductivity from the inner layer of the plastic sack to its outer layer.

Such a so-called antistatic package, such as a sack provided with a valve, can, of course, be produced out of a mono-film which is a mono-film exclusively made of an electrically conductive material. It is one of the drawbacks of this solution that such a mono-film does not give the package sufficient strength. If sufficient strength is supposed to be obtained, the package becomes relatively expensive.

The object of the present invention is to provide an improvement over the solutions known from the prior art.

The objective of the invention is achieved by means of a hose-like blank of a plastic material, which blank is characterized in that, on the inner face of the hose-like blank, there are electrically conductive areas, that on the outer face of the hose-like blank, there are electrically conductive areas, and that said electrically conductive areas have been brought into electrical contact by means of overlapping of the inner face and the outer face of the hose-like blank.

In a preferred embodiment of the invention, the package has been made of a three-layer film, whose inner face consists of an electrically conductive material and on whose outer face there are electrically conductive areas. Such an electrically conductive area is preferably an electrically conductive printing colour on the outer face, by means of whose printing area the conductivity to the ground is defined. The electrical conductivity between the inner face and the outer face of the package is provided by means of a rear seam of special construction. When such a solution is used as an antistatic sack provided with a valve, the electrically conductive face is placed outside.

By means of the present invention, a number of remarkable advantages are obtained. The invention permits the manufacture of a sack that is provided with a valve and that is glued out of an electrically conductive material. By means of the invention, it is possible to manufacture either seamed or glued packages. The invention permits the use of existing production machines, for which reason the invention does not require any additional investments. When the basic realization of the invention is utilized, the cost of manufacture of the invention does not become essentially higher than the cost of manufacture of a conventional sack provided with a valve. In particular, by means of the invention, considerable economies are obtained in the cost of material as compared with a prior-art solution in which exclusively an electrically conductive mono-film material is used.

The invention will be described in detail with reference to some preferred embodiments of the invention illustrated in the figures in the accompanying drawings.

Figure 1 is a schematic side view of a preferred embodiment of a hose-like blank of a plastic material in accordance with the invention.

Figure 2 is a sectional view of a preferred embodiment of a multi-layer film in accordance with the invention.

Figure 3 is a sectional view of a second preferred embodiment of a multi-layer film in accordance with the invention.

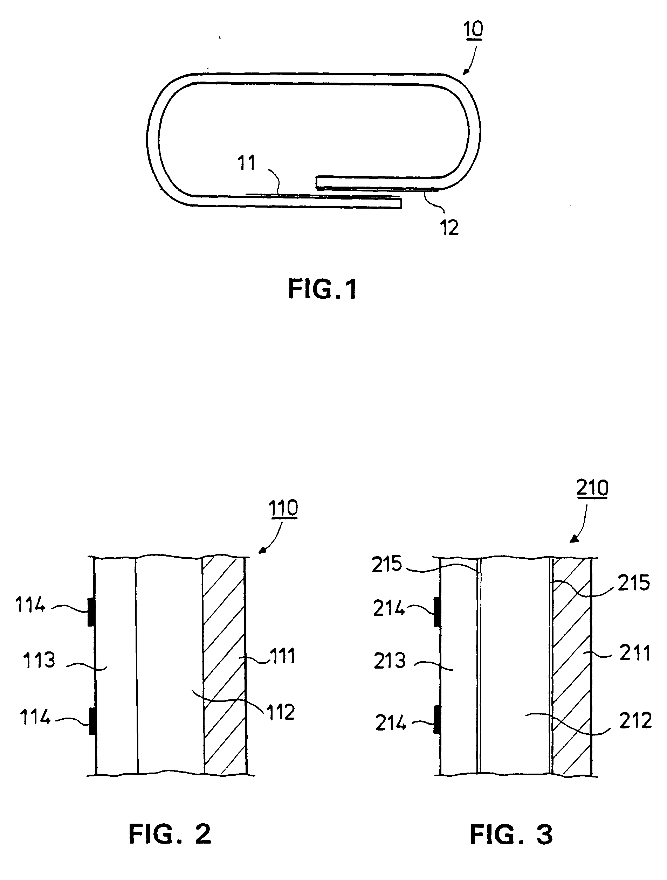

In Fig. 1, the hose-like blank of plastic material in accordance with the invention is denoted generally with the reference numeral 10. On the inner face of the hose-like blank 10, there are areas 11 which are electrically conductive. Similarly, on the outer face of the hose-like blank 10, there are areas 12 which are electrically conductive.

When a package is formed out of a hose-like blank as shown in Fig. 1, the electrically conductive areas 11 and 12 have been brought into electrical contact by means of overlapping of the electrically conductive areas 11 and 12 on the inner face and on the outer face of the hose-like blank 10.

The hose-like blank shown in Fig. 1 may consist of a mono-film or of a multi-layer film. When the hose-like blank 10 consists of a mono-film, there are electrically conductive areas 11 and 12 on both faces of such a mono-film. The electrically conductive areas 11 and 12 are preferably made of an electrically conductive printing colour.

In the embodiment shown in Fig. 2, the three-layer film in accordance with the invention is denoted generally with the reference numeral 110. The inner face 111 of the film 110 consists of an electrically conductive material. The middle layer 112 in the film 111 may consist of an ordinary plastic material. On the outer layer 113 of the film, there are areas 114 that are made of an electrically conductive material. The electrically conductive material can be favourably an electrically conductive printing colour.

The three-layer film shown in Fig. 3 is denoted generally with the reference numeral 210. The film 210 is a laminate, in which the inner layer 211 is made of an electrically conductive material, the middle layer 212 is made of an ordinary plastic material, and on the outer layer 213 there are areas 214 which are made of an electrically conductive material. The inner layer 211 and the middle layer 212 have been glued together by means of an adhesive joint 215. The middle layer 212 and the outer layer 213 have been glued together by means of an adhesive joint 215.

Of course, the basic realization of the invention illustrated in Figs. 2 and 3 can be applied to two-layer films, in which case the middle layer 112 and the middle layer 212, respectively, are unnecessary.

The hose-like blank of a plastic material in accordance with the invention can be applied to packages of all sorts. In particular, the invention is suitable for use in antistatic sacks provided with a valve. Since a sack provided with a valve is, in the other respects, in itself known, it has not been described in more detail, but reference is made to the same applicant's earlier *Finnish Patent No. 71,532,* in which a prior-art sack provided with a valve is described.

Thus, in an antistatic sack provided with a valve in accordance with the invention, at least one layer, i.e. the inner layer, is made of an electrically conductive plastic material. The printing, which is placed on the outside face of the sack provided with a valve, consists of an electrically conductive printing colour. The electrical contact between the inner layer and the outer face is produced by means of overlapping.

Above, just some preferred embodiments of the invention have been described, and it is obvious to a person skilled in the art that numerous modifications can be made to said embodiments within the scope of the inventive idea defined in the accompanying patent claims.

## Claims

1. A hose-like blank (10) of a plastic material, wherein, on the inner face of the hose-like blank (10), there are electrically conductive areas (11), on the outer face of the hose-like blank (10), there are electrically conductive areas (12), and said electrically conductive areas (11,12) have been brought into electrical contact by means of overlapping of the inner face and the outer face of the hose-like blank (10).

2. A hose-like blank as claimed in claim 1, wherein the hose-like blank is a multi-layer film (110), whose inner face (111) is made of an electrically conductive material and on whose outer face (113) there are electrically conductive areas (114).

3. A hose-like blank as claimed in claim 1 or 2, wherein the electrically conductive areas (12,114) on the outer face (113) of the hose-like blank (10,110) are made of an electrically conductive printing colour.

4. A hose-like blank as claimed in claim 2 or 3, wherein the multi-layer film (210) is a laminate, in which the inner layer (211) and the middle layer (212) have been glued together by means of an adhesive joint (215) and in which the middle layer (212) and the outer layer (213) have been glued together by means of an adhesive joint (215).

5. The use of a hose-like blank as claimed in any of the claims 1 to 4 in packages, in particular in sacks provided with a valve.

6. The use as claimed in claim 5, wherein the electrical conductivity between the inner face and the outer face of the package has been provided by means of the rear seam.

## Patentansprüche

1. Schlauchförmiger Rohling (10) aus einem Kunststoffmaterial, wobei es an der inneren Seite des schlauchförmigen Rohlings (10) elektrisch leitfähige Bereiche (11) gibt, wobei es an der äußeren Seite des schlauchförmigen Rohlings (10) elektrisch leitfähige Bereiche (12) gibt, und die elektrisch leitfähigen Bereiche (11, 12) durch Überlappen der inneren Seite und der äußeren Seite des schlauchförmigen Rohlings (10) in elektrischen Kontakt gebracht sind.

2. Schlauchförmiger Rohling gemäss Anspruch 1, wobei der schlauchförmige Rohling ein vielschichtiger Film (110) ist, dessen innere Seite (111) aus einem elektrisch leitfähigen Material hergestellt ist und es an dessen äußerer Seite (113) elektrisch leitfähige Bereiche (114) gibt.

3. Schlauchförmiger Rohling gemäss Anspruch 1 oder 2, wobei die elektrisch leitfähigen Bereiche (12, 114) an der äußeren Seite (113) des schlauchförmigen Rohlings (10, 110) aus einer elektrisch leitfähigen Druckfarbe hergestellt sind.

4. Schlauchförmiger Rohling gemäss Anspruch 2 oder 3, wobei die vielschichtige Folie (210) ein Laminat ist, bei welchem die innere Schicht (211) und die mittlere Schicht (212) mittels einer Klebverbindung (215) miteinander verklebt sind und bei welcher die mittlere Schicht (212) und die äußere Schicht (213) mittels einer Klebverbindung (215) miteinander verklebt sind.

5. Verwendung eines schlauchförmigen Rohlings gemäss einem der Ansprüche 1 bis 4 bei Verpackungen, insbesondere bei mit einem Ventil versehenen Beutel.

6. Verwendung gemäss Anspruch 5, wobei die elektrische Leitfähigkeit zwischen der inneren Seite und der äußeren Seite der Verpackung mittels einer Rückseitennaht vorgesehen ist.

## Revendications

1. Ebauche de type tuyau (10) en matériau plastique, dans laquelle sur la face intérieure de l'ébauche de type tuyau (10), il est prévu des zones électriquement conductrices (11), sur la face extérieure de l'ébauche de type tuyau (10), il est prévu des zones électriquement conductrices (12) et lesdites zones électriquement conductrices (11,12) ont été mises en contact électrique entre elles par chevauchement de la face intérieure et de la face extérieure de l'ébauche de type tuyau (10).

2. Ebauche de type tuyau selon la revendication 1, dans laquelle l'ébauche de type tuyau est un film multicouches (110) dont la face intérieure (111) est réalisée à partir d'un matériau électriquement conducteur et sur la face extérieure (113) duquel sont prévues des zones électriquement conductrices (114).

3. Ebauche de type tuyau selon la revendication 1 ou 2, dans laquelle les zones électriquement conductrices (12,114) sur la face extérieure (113) de l'ébauche de type tuyau (10,110) sont réalisées à partir d'une couleur d'impression électriquement conductrice.

4. Ebauche de type tuyau selon la revendication 2 ou 3, dans laquelle le film multicouches (210) est un stratifié, dans lequel la couche intérieure (211) et la couche médiane (212) ont été collées ensemble au moyen d'un joint adhésif (215) et dans laquelle la couche médiane (212) et la couche extérieure (213) ont été collées ensemble au moyen d'un joint adhésif (215).

5. Utilisation d'une ébauche de type tuyau selon l'une quelconque des revendications 1 à 4 dans des emballages, en particulier dans des sacs munis d'une valve.

6. Utilisation selon la revendication 5, dans laquelle la conductivité électrique entre la face intérieure et la face extérieure de l'emballage a été assurée au moyen du cordon arrière.
